# EUROPEAN PATENT SPECIFICATION

(11) **EP 0 412 347 B1**
(45) Date of publication and mention of the grant of the patent: **25.01.1995**
(21) Application number: 90114046.7
(22) Date of filing: 23.07.1990
(51) Int. Cl.: C08K 5/3477, C08L 69/00, C08K 5/42

(54) **Flame retardant thermoplastic containing (iso) cyanurate**
(ISO)-Cyanurat enthaltender flammenhemmender thermoplastischer Kunststoff
Matière thermoplastique retardatrice des flammes contenant un (iso) cyanurate

(30) Priority: 07.08.1989 US 390313
(43) Date of publication of application: 13.02.1991
(73) Proprietor: GENERAL ELECTRIC COMPANY, Schenectady New York 12305 (US)
(72) Inventor: Nelson, Linda Harmon, Evansville, Indiana 47712 (US)
(74) Representative: Pratt, Richard Wilson

(56) References cited:
- EP-A- 0 127 818
- EP-A- 0 303 076
- FR-A- 2 403 357
- US-A- 3 959 219
- Derwent WPI, acc.no. 79-08577B & JP-A-53143668
- STN CA 90(24):187936h & JP-A-53143668

## Description

This invention relates to improved flame retardant aromatic carbonate polymers containing as a flame retardant certain cyanurates or isocyanurates, hereinafter conjointly indicated as (iso)cyanurates.

Flame retardant properties are required for many plastics, especially those involved in electrical and transportation applications. A major flammability test used in electrical applications is the Underwriters Laboratory UL94 test, to which many flammability standards refer. In this test, a vertical sample of the plastic of specified dimensions is ignited from the bottom by a specified flame applied for 10 seconds. Afterflame time and the presence or absence of flaming drips is observed. For many electrical applications, a rating of V0 by this test is the requirement; to achieve such a V0 rating, not only must the plastic sample have an afterflame time of less than 10 seconds but it must also not produce flaming drips. Otherwise, if flaming drips occur, or the afterflame time exceeds 10 seconds, the sample will be given a less favorable UL94 rating and will be excluded from the more demanding electrical applications.

The means for achieving high flame retardancy, such as V0 ratings by UL94, hitherto have involved addition of brominated compounds and antimony oxide. Several difficulties result from this methodology: the additives commonly degrade physical properties somewhat, either heat distortion temperature or impact strength. They cause opacity and undesired pigmentation. Bromine compounds and antimony are of some concern in regard to pollution. The presence of brominated additives in a thermoplastic frequently causes mold corrosion. Upon combustion of such compositions, the smoke is sometimes elevated and the vapors contain corrosive hydrogen bromide which can damage nearby electrical circuitry.
As alternatives to brominated flame retardants, phosphorus esters such as phosphonates and phosphates have also been used. These can cause some exudation problems.

An alternative approach to flame retarding thermoplastics is to introduce high loadings of mineral fillers which release water endothermically when exposed to a fire; examples are alumina trihydrate and magnesium hydroxide. However, such high loadings greatly compromise the physical properties of the plastic.

It is an object of the present invention to provide nonhalogen flame retardant additives for polycarbonates, which are effective at low levels.

I have found that this requirement is met by certain non-halogenated cyanurates and isocyanurates.

It has been known in the art to use melamine salts of cyanuric acid as flame retardants for polyolefins, but since melamine itself is a known flame retardant, it is not obvious that cyanuric acid absent the melamine would be a flame retardant nor that it would perform in the polymers of the invention. It is especially surprising that low dripping formulations could be attained by use of the (iso)cyanurates of the invention, since melamine cyanurate is known to increase dripping tendency in certain thermoplastics.

Further, it is known in the flame retardancy art that tris(dibromopropyl)isocyanurate is a flame retardant for polyolefins but here also, halogens such as bromine are known flame retardant elements and it is not obvious that isocyanurates absent the halogen would have flame retardant utility. It was surprising and unexpected that the particular flame retardant (iso)cyanurates of the present invention would be effective in the encompassed thermoplastic polymers.

US-A-3959219 discloses a thermoplastic resin composition comprising a flammable thermoplastic resin, a flame retarding agent composed of a halogenated aromatic compound an organic compound having a cyanurate or isocyanurate ring structure.

JP-A-53143668 discloses fire resistant polyamides with reduced bleeding of flame proofing agents are obtained by treating blends of polyamide and a nitrogen containing compound with an organic sulfonic acid salt.

The present invention provides a flame retardant thermoplastic composition consisting of (a) an aromatic carbonate polymer, and, per 100 parts by weight of said polymer, (b) 0.05 to 10 parts by weight of a nonhalogen (iso)cyanurate selected from triphenyl cyanurate, triglycidyl isocyanurate, cyanuric acid or an alkali metal salt of cyanuric acid, and, optionally, (c) from 0.05 to 2 parts by weight of a sulfonate salt flame retardant for polycarbonates.

Triglycidyl isocyanurate is an especially preferred flame retardant.

Flame retardant amounts of the (iso)cyanurates are in the range of from 0.05 to 10 phr (parts per hundred parts by weight of resin), preferably from 0.1 to 3 phr. When used in conjunction with the sulfonate flame retardants, the amounts can be toward the low end of the cited range.

The aromatic carbonate polymers are prepared by interfacial polymerization as described in U.S- A - 3,028,365; 3,334,154; 3,275,601; 3,915,926; 3,030,331; 3,169,121; 3,027,814; and 4,188,314.

In general, the method of interfacial polymerization comprises the reaction of a dihydric phenol with a carbonyl halide (the carbonate precursor).

The dihydric phenols employed are known, and the reactive groups are the two phenolic hydroxyl groups. Some of the dihydric phenols are represented by the general formula: 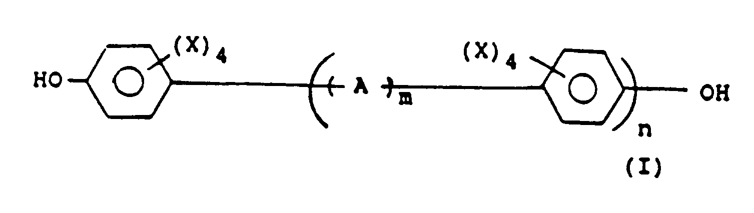
wherein A is a divalent hydrocarbon radical containing from 1 to 15 carbon atoms; a substituted divalent hydrocarbon radical containing from 1 to 15 carbon atoms and substituent groups halogen; -S- ; -SS-; -S(O)- ; -S(O)₂-; -O- : or -C- ; wherein each X is independently selected from the group consisting of hydrogen, halogen, an alkyl group of from 1 to 8 carbon atoms, an aryl group of from 6-18 carbon atoms, an aralkyl group of from 7 to 14 carbon atoms, an alkaryl group of from 7 to 14 carbon atoms, an alkoxy group of from 1 to 8 carbon atoms, or an aryloxy group of from 6 to 18 carbon atoms; and wherein m is zero or 1 and n is an integer of from 0 to 5.

Typical of the dihydric phenols that can be employed in the practice of the present invention is 2,2-bis(4-hydroxyphenyl)propane (also known as bisphenol-A).

A variety of additional dihydric phenols are disclosed in U.S - A - 2,999,835; 3,028,365 and 3,153,008 It is, of course, possible to employ two or more different dihydric phenols or a combination of a dihydric phenol with glycol.

Also included within the scope of the present invention are the high molecular weight thermoplastic randomly branched polycarbonates. These randomly branched polycarbonates are prepared by coreacting a polyfunctional organic compound with the aforedescribed dihydric phenols and carbonate precursor. The polyfunctional organic compounds useful in making the branched polycarbonates are set forth in U.S - A - 3,635,895 and 4,001,184.

The preferred polycarbonates for use in the present invention are those derived from bisphenol A and phosgene and having an intrinsic viscosity of 0.3 to 1.5 deciliters per gram in methylene chloride at 25°.

Blends of aromatic carbonate polymers are also suitable for use in the invention.

The flame retardant additive triglycidyl isocyanurate is a known compound; it is made for example by the reaction of epichlorohydrin with isocyanuric acid. An effective amount of triglycidyl isocyanurate is from 0.1 to 10 phr, preferably 0.2 to 5 phr.

It is found advantageous to use this flame retardant in conjunction with flame retardant amounts of sulfonate salts which are well known in the art as flame retardants for aromatic carbonate polymers. Suitable sulfonate salts for use as flame retardants in polycarbonates are disclosed in U. S - A - 4,735,978. Also useful are the fluorinated alkylsulfonates such as those disclosed in U. S- A - 3,775,367 or 4,438,231; as well as the aromatic sulfimide and sulfonamide salts disclosed in U. S - A - 4,786,686
The preferred sulfonate salt is the potassium salt of sulfonated diphenyl sulfone, because of its high efficiency and ability to provide transparent resin formulations. A flame retardant amount of any of these sulfonates is in the range of 0.05 to 2 phr.

The production of the compositions of the invention is done by any of the operations known for the blending of thermoplastics, such as in a kneading machine such as a Banbury mixer or an extruder, or solvent blending. The sequence of addition is not critical but all components should be thoroughly blended. Blending can be done continuously or batchwise.

The compositions of the invention may be further modified by the addition of other types of additives known to the art of plastics compounding. Such additives can include for example fillers (such as clay or talc), reinforcing agents (such as glass fibers), impact modifiers, other resins, antistats, plasticizers, flow promoters and other processing aids, stabilizers, colorants, mold release agents, other flame retardants and ultraviolet screening agents.

### EXAMPLES 1-3

A polycarbonate (Lexan® 145, made by General Electric Co., from bisphenol A and phosgene) was admixed with various levels of triglycidyl isocyanurate, and the compositions were molded into 3.175 mm (1/8 inch) thickness test bars for the Underwriters laboratory UL94 flammability test. The results are shown in the following table:

| Example No. | 1* | 2 | 3 |
|---|---|---|---|
| Level of TGIC: | - | 0.6 | 1.8 |

| UL94 results: | | | |
|---|---|---|---|
| Burn time, average | 26.9 | 6.4 | 0.8 |
| Burn time, range | 1.8-40.1 | 1.2-25.7 | 0.5-1.1 |
| UL94 rating | B | V2 | V0 |

| | | | |
|---|---|---|---|
| * Control | | | |

A comparative experiment with another epoxide, Araldite® GT7072 (a glycidyl ether of bisphenol A made by Ciba-Geigy Co.) at similar levels of addition in the same polycarbonate, failed to give a flame retardant result and all formulations dripped severely when ignited.

### EXAMPLES 4-7

An aromatic polycarbonate made from bisphenol A and phosgene was admixed with various amounts of (iso)cyanurates, and tested as in the preceding examples.

| Example No. | 4* | 5 | 6 | 7 |
|---|---|---|---|---|
| Additive (phr): | | | | |
| Triphenyl cyanurate | - | 0.42 | 0.15 | - |
| Cyanuric acid | - | - | - | 0.16 |
| KSS** | 0.3 | 0.3 | 0.3 | 0.3 |

| UL94 Results: | | | | |
|---|---|---|---|---|
| Burn time, av. | 6.2 | 6.0 | 4.6 | 3.1 |
| Burn time, range | 1.7-12 | 1.4-12 | 1-11 | 0.8-6 |
| Flaming drip | yes | no | no | no |
| UL94 rating | V2 | V1 | V1 | V0 |

| | | | | |
|---|---|---|---|---|
| * Control | | | | |
| ** The potassium salt of sulfonated diphenyl sulfone These data show the flame retardant effect (which includes a drip suppressant effect) of the compounds of the invention. | | | | |

## Claims

1. A flame retardant thermoplastic composition consisting of (a) an aromatic carbonate polymer, and, per 100 parts by weight of said polymer, (b) 0.05 to 10 parts by weight of a nonhalogen (iso)cyanurate selected from triphenyl cyanurate, triglycidyl isocyanurate, cyanuric acid or an alkali metal salt of cyanuric acid, and, optionally, (c) from 0.05 to 2 parts by weight of a sulfonate salt flame retardant for polycarbonates.

2. The thermoplastic composition defined in Claim 1 wherein said polycarbonate is derived from bisphenol A and phosgene.

3. The thermoplastic composition defined in Claim 1 wherein said sulfonate salt is the potassium salt of sulfonated diphenyl sulfone.

4. The thermoplastic composition defined in Claim 1 wherein said triglycidyl isocyanurate is present in the range of from 0.1 to 3 parts by weight.

## Patentansprüche

1. Flammhemmende thermoplastische Zusammensetzung, bestehend aus (a) einem aromatischen Carbonatpolymer und pro 100 Gewichtsteile des besagten Polymer, (b) 0,05 bis 10 Gewichtsteile eines nicht-halogenierten (Iso)Cyanurats, ausgewählt aus Triphenylcyanurat, Triglycidyl-isocyanurat, Cyanursäure oder einem Alkalimetallsalz der Cyanursäure, und fakultativ (c) 0,05 bis 2 Gewichtsteile eines Sulfonatsalz flammhemmenden Mittels für Polycarbonate.

2. Thermoplastische Zusammensetzung nach Anspruch 1, worin das Polycarbonat abgeleitet ist aus Bisphenol-A und Phosgen.

3. Thermoplastische Zusammensetzung nach Anspruch 1, worin das Sulfonatsalz das Kaliumsalz des sulfonierten Diphenylsulfons ist.

4. Thermoplastische Zusammensetzung nach Anspruch 1, worin das besagte Triglycidyl-isocyanurat im Bereich von 0,1 bis 3 Gewichtsteilen vorhanden ist.

## Revendications

1. Composition thermoplastique ignifugée, constituée de (a) un polymère de type polycarbonate aromatique et, pour 100 parties en poids de ce polymère, de (b) 0,05 à 10 parties en poids d'un cyanurate ou isocyanurate non halogéné, choisi parmi le cyanurate de triphényle, l'isocyanurate de triglycidyle, l'acide cyanurique et un sel de métal alcalin de l'acide cyanurique, et éventuellement, de (c) 0,05 à 2 parties en poids d'un agent ignifugeant de type sel sulfonate pour polycarbonates.

2. Composition thermoplastique conforme à la revendication 1, dans laquelle ledit polycarbonate dérive du bisphénol A et du phosgène.

3. Composition thermoplastique conforme à la revendication 1, dans laquelle ledit sel sulfonate est le sel de potassium d'une diphénylsulfone sulfonée.

4. Composition thermoplastique conforme à la revendication 1, dans laquelle ledit isocyanurate de triglycidyle se trouve en une quantité de 0,1 à 3 parties en poids.
